# EUROPEAN PATENT APPLICATION

(11) **EP 1 304 590 A2**
(43) Date of publication of application: **23.04.2003**
(21) Application number: 02256989.1
(22) Date of filing: 04.10.2002
(51) Int. Cl.: G02B 6/44

(54) **Optical fibre splice storage enclosure**

(30) Priority: 09.10.2001 GB 0124227
(71) Applicant: SPIRENT PLC, Crawley, West Sussex RH10 2QL (GB)
(72) Inventor: Foss, Raymond Charles, Plymouth, PL3 4NX (GB); Marshall, Christopher, Devon PL21 9UN (GB)
(74) Representative: Evans, Huw David Duncan

(57) **Abstract**

An optical fibre splice storage enclosure comprises a base 10 having at least one cable entry port 11 formed therein, a tubular cover 12 for fitting to the base 10 and a plurality of trays 13 mounted in a stack which extends perpendicular to the through axis of the port(s) 11 and the longitudinal axis of the cover 12. Each tray 13 is connected to the base 10 by an elongate stem 17 which is arranged to bend about a plurality of transverse points disposed along its longitudinal axis.

In a large stack of trays, access can be afforded to a middle tray 13 by pivoting the trays 13 on one side of the stack outwardly and towards the base 10. The configuration of the stems 17 enables the first tray 13 in the stack to pivot the most nearer the base 10, with successive trays 13 pivoting the most successively further away from the base. In this manner adequate access can be provided to all trays without the need to stagger the trays along the longitudinal axis of the cover 12.

## Description

This invention relates to an optical fibre splice storage enclosure.

European Patent Application No. 0 159 857 discloses an optical fibre splice storage enclosure comprising a base having a plurality of trays mounted in the enclosure and extending axially of the through axis of the cable entry parts. A capended tubular cover is provided for fitting to the base to sealingly contain the trays.

When the cover is removed, each tray can be pivoted about an axis extending transverse thereto and perpendicular to the through axis of the ports, so as to allow access to the trays, for example to position splices.

In order to permit each tray in the stack to pivot through 70 - 90°, the axes about which the trays pivot are stepped from one side of the stack to the other, so that the trays can pivot without fouling adjacent trays in the stack.

Typically a single cable entering the base through one of the ports is cut back inside the enclosure to expose a plurality of fibre carrying tubes which are fed to respective trays in the stack. A disadvantage of this is that each tray has to accommodate a slightly different length of fibre owing to the distance between the trays and the base being different as a result of the stepped configuration. A slight difference in the length of stored fibre can mean that the end of the fibre may not be positioned correctly to meet with another fibre or device on the tray.

We have now devised an optical fibre splice storage enclosure which alleviates the above-mentioned problem.

In accordance with the invention there is provided an optical fibre splice storage enclosure comprising a base having at least one cable entry port formed therein, a tubular cover for fitting to the base and a plurality of trays mounted in a stack which extends perpendicular to the through axis of the port(s) and the longitudinal axis of the cover, each tray extending axially of the cover when the latter is fitted to the base, each tray being connected to the base by an elongate stem which is arranged to bend about a plurality of transverse points disposed along its longitudinal axis.

In a large stack of trays, access can be afforded to a middle tray by pivoting the trays on one side of the stack outwardly and towards the base. The configuration of the stems enables the first tray in the stack to pivot the most nearer the base, with successive trays pivoting the most successively further away from the base. In this manner adequate access can be provided to all trays without the need to stagger the trays along the longitudinal axis of the cover.

Preferably the stems solely permit the trays to pivot perpendicular to their respective major planes.

Preferably each stem comprises a plurality of interconnected segments having a gap between adjacent segments, about which the stem bends.

Preferably the angle through which the stem is able to bend at each point is restricted.

Preferably the stem comprises a one-piece member of plastics material.

Embodiments of this invention will now be described by way of examples only and with reference to the accompanying drawings, in which:
Figure 1 is a front view of a first embodiment of optical fibre splice enclosure in accordance with this invention, with some parts being shown in section,
Figure 2 is a side view of a stack of trays of the splice enclosure of Figure 1;
Figure 3 is an enlarged view of a support stem of one of the trays of the enclosure of Figure 1;
Figure 4 is a side view of the stack of trays of the enclosure of Figure 1, showing one way how the trays pivot;
Figure 5 is a side view of the stack of trays of the enclosure of figure 1, showing another way how the trays can pivot;
Figure 6 is a front view of a support stem of a second embodiment of optical fibre splice enclosure in accordance with this invention;
Figure 7 is a side view of a stack of trays of the enclosure of Figure 6, showing how the trays pivot; and
Figure 8 is a front view of a support stem of a third embodiment of optical fibre splice enclosure in accordance with this invention.

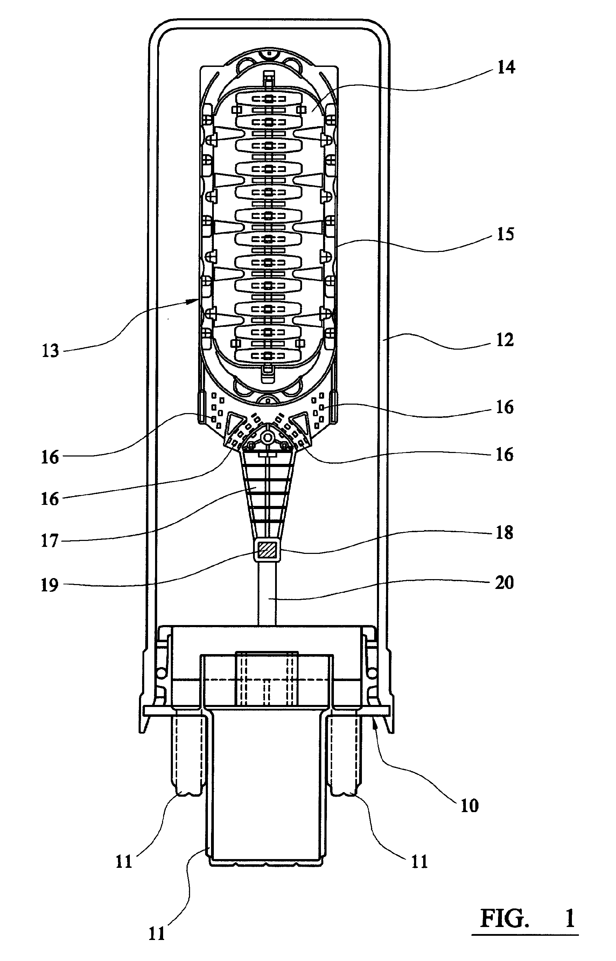

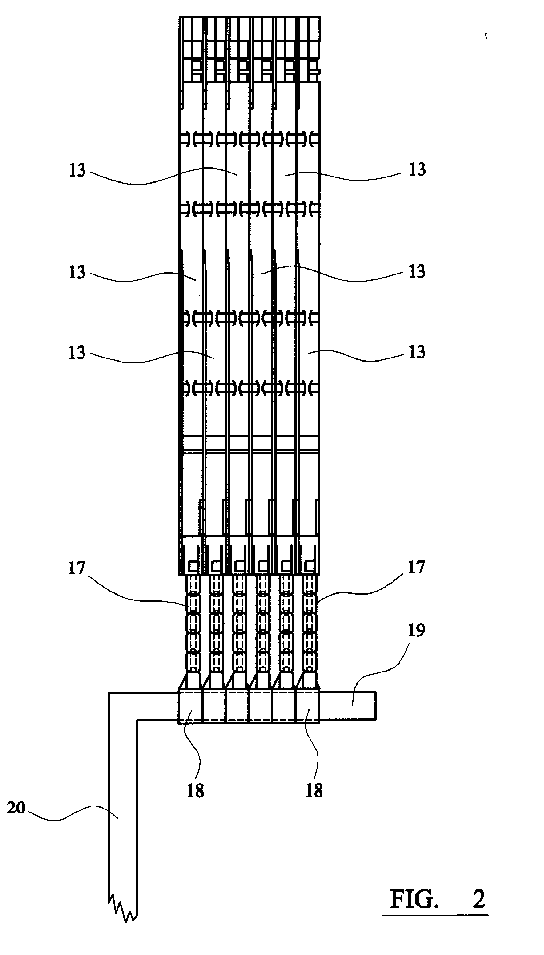

Referring to Figures 1 and 2 of the drawings, there is shown an embodiment of optical fibre splice enclosure comprising a base 10 having a plurality of tubular cable entry ports 11 projecting from the lower side thereof. A tubular capended cover 12 is provided for fitting to the opposite side of the base 10, in order to sealingly enclose a plurality of trays 13.

Each tray 13 comprises a flat rectangular base 14, a peripheral side wall 15 and a plurality of fibre entry ports 16 formed at one end.

The trays 13 are mounted in a stack which extends perpendicular to the longitudinal axis of the cover 13 and to the through-axis of the cable entry ports 11. Each tray 11 thus extends longitudinally of the cover 13.

Each tray 13 is connected to the base 10 by means of a one-piece support stem 17 which extends longitudinally outwards from one end of the tray 13, adjacent the fibre entry ports 16. The outer end of the stem 17 is provided with a formation 18 having an aperture formed therein which extends perpendicular to the plane of the tray 13.

The trays 13 are mounted to the base by sliding the apertured formations 18 of their respective support stems onto an elongate support bar 19 which extends perpendicular to the through axis of the cable entry ports 11 in the base 10. The support bar 19 is connected to the base 10 by an upright portion 20 which is plugged into a socket formed in the base 10.

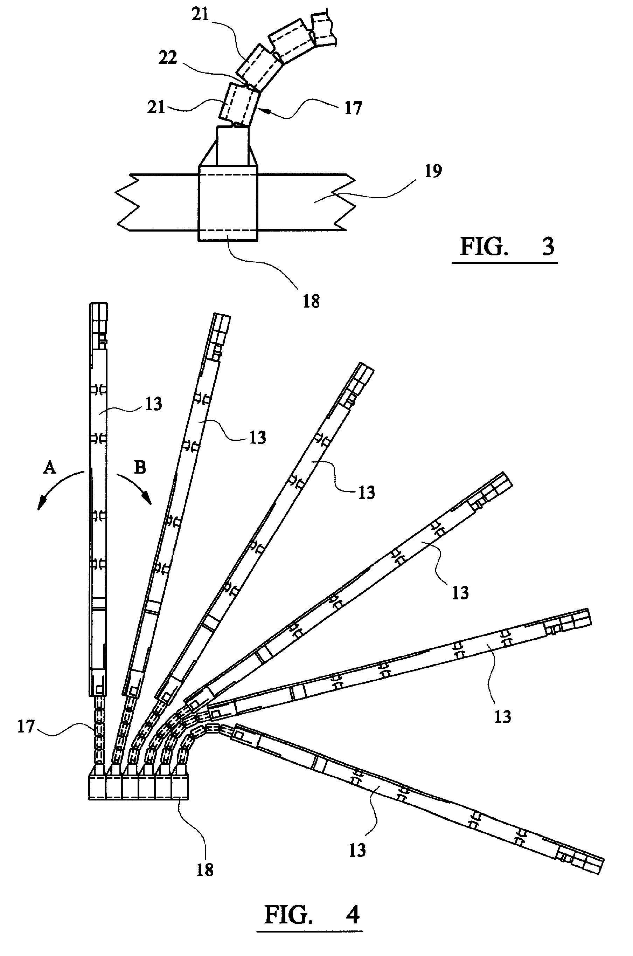

Referring to Figure 3 of the drawings, each stem 17 comprises a plurality of segments 21 interconnected by a flexible web 22. The segments 21 are spaced apart and thus the webs 22 allow the stem 17 to bend longitudinally of itself, with the distance between the segments 21 governing the angle through which the stem 17 can bend at each web.

Referring to Figure 4 of the drawings, the stems 17 are arranged to only permit bending in either direction A, B in one plane, which extends longitudinally of the closure and perpendicular to the plane of the trays 13.

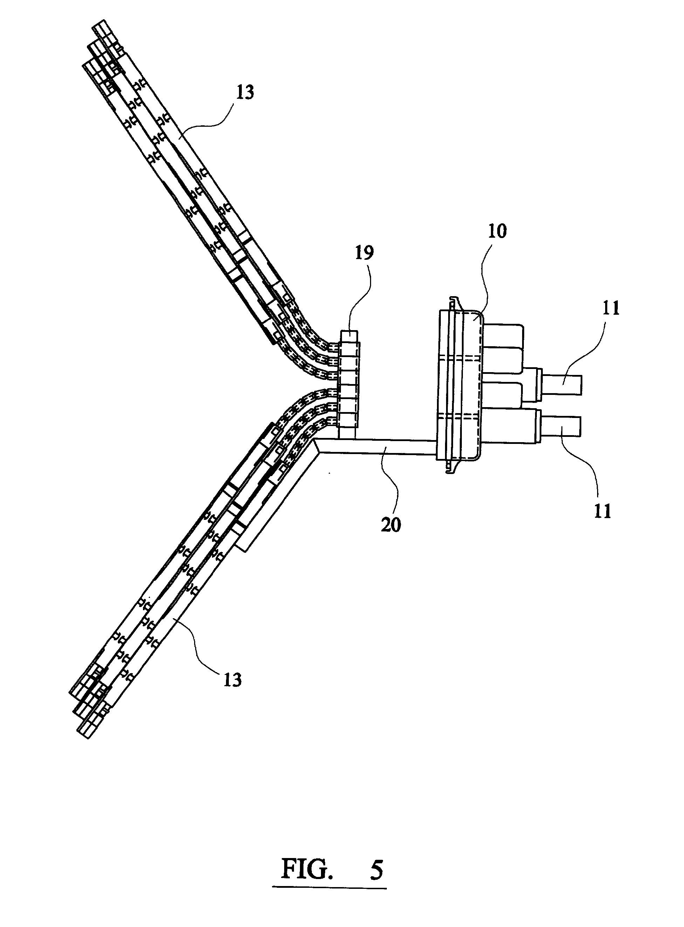

Referring to Figure 5 of the drawings, in order for an engineer to effect splices etc. in the trays 13, the cover 12 is removed and the base 10 mounted on a bench in the horizontal configuration. Access can be afforded to each tray by pivoting the trays above it in the stack upwardly through about 53° and by pivoting the tray and all of the trays below it in the stack downwardly through about 53°. Thus, a large space is provided for an engineer to work on the exposed tray.

The support stem 17 of the outermost trays 17 in the stack bend the most adjacent to the base 10, whilst the stems 17 of the other trays towards the centre of the stack bend successively further away from the base. In this manner, each tray is able to pivot through a wide angle without fouling other trays in the stack.

The distance between all of the trays 17 and the base 10 is the same. Thus equal length fibre extending from a cable entering the enclosure through the base to respective trays 17 will terminate at exactly the same point in each tray.

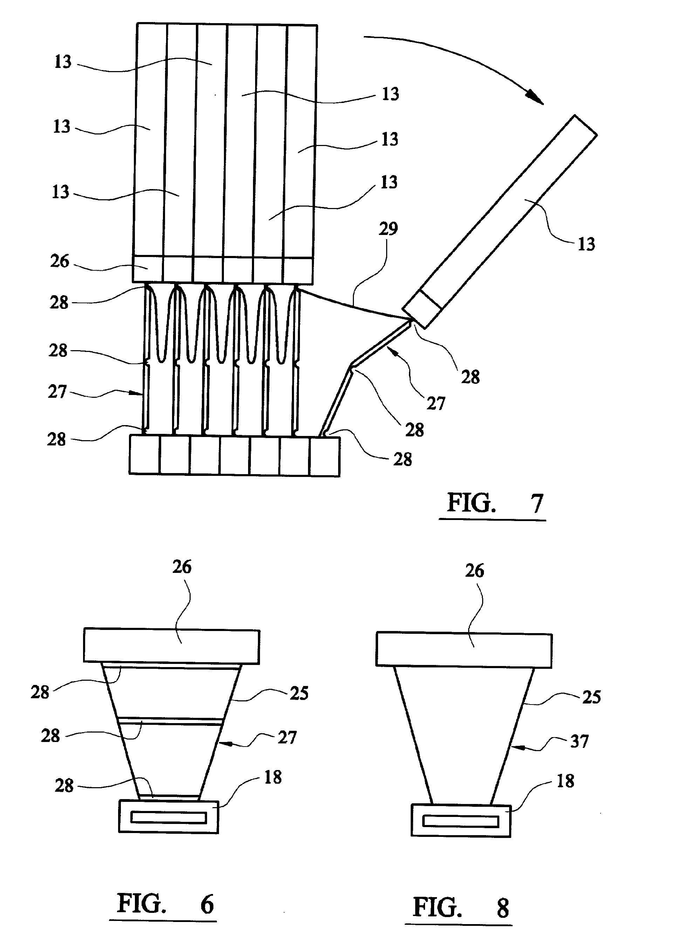

Referring to Figures 6 and 7 of the drawings, in an alternative embodiment of optical fibre splice enclosure, each stem 27 comprises a one-piece moulding of flexible plastic material having an upper portion 26 adapted to engage the tray 13 and an apertured lower portion 18 adapted to engage the base 10. The upper and lower portions 26,18 are interconnected by a flat web-like central portion 25 which lies in a plane extending parallel to its tray 13, when the latter is upright.

A plurality of lines of weakness 28 extend across one or both surfaces of the central portion 25 of the stem 27, which allows the stem to bend longitudinally of itself. The number of lines of weakness may vary depending on the application.

In order to limit the angle through which the trays 13 can pivot, the assembly of each tray 13 and its respective stem 27 is connected to each adjacent assembly by respective elongate flexible straps 29. Means may be provided to fasten the trays 13 together in the upright position, such that they form a solid body, which can support trays in the pivoted position via the straps 29, as shown in Figure 7.

Referring to Figure 8 of the drawings, there is shown the stem 37 of an alternative embodiment of optical fibre splice enclosure, which is similar to the stem 27 of Figures 7 and 8 and like parts are given like reference numerals. In this embodiment, the central portion 25 of the stem is formed of a flexible plastics material which permits the stem 37 to bend longitudinally of itself at a multiplicity points along its length. The stems are formed of a resiliently flexible plastics material having a resilience which is sufficient to maintain the trays in the upright position when unsupported.

## Claims

1. An optical fibre splice storage enclosure comprising a base having at least one cable entry port formed therein, a tubular cover for fitting to the base and a plurality of trays mounted in a stack which extends perpendicular to the through axis of the port(s) and the longitudinal axis of the cover, each tray extending axially of the cover when the latter is fitted to the base, each tray being connected to the base by an elongate stem which is arranged to bend about a plurality of transverse points disposed along its longitudinal axis.

2. An optical fibre splice storage enclosure as claimed in claim 1, in which the stems solely permit the trays to pivot perpendicular to their respective major planes.

3. An optical fibre splice storage enclosure as claimed in claim 2, in which the width of each stem is substantially greater than its thickness, such that the stems solely bend about axes which extend across the width thereof.

4. An optical fibre splice storage enclosure as claimed in any preceding claim, in which each stem comprises a plurality of interconnected segments having a gap between adjacent segments, about which the stem bends.

5. An optical fibre splice storage enclosure as claimed in claim 4, in which the interconnected segments comprise pivotally interconnected individual members.

6. An optical fibre splice storage enclosure as claimed in claim 4, in which each stem is a one piece member and is arranged to bend about lines of weakness which extend across the member at said plurality of transverse points.

7. An optical fibre splice storage enclosure as claimed in any of claims 1 to 3, in which each stem comprises an elongate flexible member which is bendable about a multiplicity of points along its length.

8. An optical fibre splice storage enclosure as claimed in any preceding claim, in which the assembly of each tray and its respective stem is connected to each adjacent assembly by respective strapping members which limit the angle through which the trays can pivot.

9. An optical fibre splice storage enclosure as claimed in any of claims 4 to 6, in which the angle through which the stem is able to bend at each point is restricted.

10. An optical fibre splice storage enclosure as claimed in any preceding claim, in which the stems are formed of a resiliently flexible material having a resilience which is sufficient to maintain the trays in the upright position when unsupported.
